# FASCICULE DE BREVET EUROPEEN

(11) **EP 2 642 944 B1**
(45) Date de publication et mention de la délivrance du brevet: **15.04.2015**
(21) Numéro de dépôt: 12806574.5
(22) Date de dépôt: 26.11.2012
(51) Int. Cl.: A61C 17/00, A61C 17/02

(54) **CANULE ET ADAPTATEUR POUR SERINGUE MULTIFONCTION**
KANÜLE UND ADAPTER FÜR EINE MULTIFUNKTIONALE SPRITZE
CANNULA AND ADAPTER FOR MULTI-FUNCTION SYRINGE

(30) Priorité: 05.12.2011 FR 1161162
(43) Date de publication de la demande: 02.10.2013
(73) Titulaire: Produits Dentaires Pierre Rolland, 33700 Merignac (FR)
(72) Inventeur: FOURNIE, Marguerite, 33510 Andernos-les-Bains (FR); SAUROU, Sabrina, 75116 Paris (FR)
(74) Mandataire: Lefevre-Groboillot, David André
(86) Numéro de dépôt international: PCT/FR2012/052724
(87) Numéro de publication internationale: WO 2013/083899

(56) Documents cités:
- US-A1- 2009 317 758

## Description

### Domaine technique et art antérieur

L'invention s'inscrit dans le domaine des équipements et appareils d'art dentaire.

Les cabinets de chirurgie-dentaire sont couramment équipés de fauteuils intégrant de nombreux instruments disponibles à portée de main pour le praticien se penchant sur son patient. Parmi ces instruments, la seringue de projection d'air, d'eau et de mélange air/eau (seringue multifonction ou seringue air/eau) est un élément central de l'équipement.

La fonction de la seringue air/eau est de délivrer un flux constant du fluide ou du mélange de fluide sélectionné, pour permettre au praticien de rincer et sécher des zones de la cavité buccale en fonction du déroulement de son intervention. Quand la fonction air seul de la seringue est utilisée, il est particulièrement important que l'air projeté soit rigoureusement sec, pour garantir la qualité de l'intervention.

En fonction du fabricant du fauteuil, différentes seringues air/eau existent. Ces seringues sont souvent en acier inoxydable, et parfois en aluminium ou en résine synthétique. Elles sont fournies avec un embout dont la forme est adaptée à l'introduction et l'orientation dans la bouche du patient. Cet embout est démontable mais non consommable, et il est donc nécessaire de le nettoyer et de le stériliser, une fois démonté, entre deux interventions, ce qui est évidemment une tâche coûteuse et fastidieuse, et aussi assez aléatoire dans son résultat.

Il a été proposé de remplacer l'utilisation de cet embout non consommable, difficilement nettoyable et stérilisable, par l'utilisation d'embouts jetables, à usage unique, faciles à installer sur la seringue entre deux patients. L'utilisation de tels embouts s'est largement répandue ces dernières années, permettant d'améliorer les conditions d'hygiène au bénéfice des patients et des praticiens.

Ainsi, le document WO 9204878, qui aborde le problème de la réduction des coûts de fabrication de tels embouts jetables, décrit un ensemble composé d'une canule et d'un adaptateur métallique connectable en une première extrémité à une seringue d'un type donné, et en une deuxième extrémité à une douille de connexion d'une canule jetable en plastique moulé. Des canaux en saillie, mâles, sur l'adaptateur, s'étendant côte à côte, sont insérés, lors de l'assemblage, dans les embouchures de canaux femelles de la canule pour amener l'eau et l'air dans celle-ci.

Les deux pièces, canule et adaptateur, sont orientées l'une par rapport à l'autre par alignement d'une nervure axiale portée par la paroi interne de la douille de la canule et d'une rainure complémentaire portée par la paroi externe de l'adaptateur. Une fois ainsi positionnées, les pièces sont engagées en translation l'une avec l'autre, et après une rapide course, les canaux mâles engagent les canaux femelles.

Néanmoins, ce système présente l'inconvénient que le positionnement initial de la canule et de la seringue ne se fait essentiellement que visuellement, par alignement de la nervure et de la rainure. Si l'alignement de celles-ci n'est qu'approximatif et que la poussée exercée par l'utilisateur est trop rapide, l'engagement se produit avec un léger décalage des pièces, ce qui a pour conséquence que les canaux mâles touchent les parois des canaux femelles. Cela peut déboucher sur la formation d'un copeau de plastique susceptible de boucher les canaux, voire de provoquer la déformation d'un canal mâle, et ainsi de générer des dysfonctionnements de la seringue multifonction.

D'autre part, ce système suppose un ajustement dimensionnel très fin entre les deux parties (canule et adaptateur) afin d'éviter que sous la pression des fluides, la canule se désolidarise, tombe de la seringue, voire soit ingérée par le patient. Une alternative, présentée dans le document WO 9204878, consiste à prévoir, sur la face interne de la douille de connexion, plusieurs projections déformables élastiquement qui sont reçues par une gorge périphérique de l'adaptateur. Néanmoins, cette solution complique la mise en place de la canule.

Enfin, le système du document WO 9204878 présente un risque de torsion des canaux mâles de l'adaptateur lors de la dépose de la canule. En effet, compte tenu de la nécessaire fixation solide de la canule à la seringue, l'utilisateur doit exercer une certaine force pour retirer la canule. Il peut être tenté de saisir le tube à proximité de la douille, et de le tordre pour augmenter sa prise sur la canule. Cela a pour conséquence de tordre également les canaux mâles engagés dans les canaux femelles du tube.

Il est aussi connu du document WO9007912 une canule pour seringue dentaire qui peut être fixée sur la seringue à l'aide d'une « baïonnette » portée par la seringue ou un adaptateur et faisant saillie radialement vers l'extérieur. Une telle « baïonnette » coopère avec une fente en équerre portée par la canule. Précisément la fente possède une portion d'entrée parallèle à la direction longitudinale, et une deuxième portion à 90° de la première, sur un secteur angulaire de la circonférence de la canule.

La « baïonnette » est tout d'abord amenée, par le praticien, par un mouvement relatif de la canule et de la seringue dans la direction longitudinale, en butée à l'intersection des deux sections de la fente. Elle est ensuite amenée au fond de la deuxième section par une rotation relative de la canule et de la seringue.

On remarque que ce système de fixation à baïonnette n'est pas compatible avec les canaux de la canule décrite dans le document WO 9204878, puisqu'avec les canaux disposés l'un à côté de l'autre de cette canule, l'alignement des deux pièces doit être effectué avant leur mouvement relatif dans la direction longitudinale. Le document WO 9007912 prévoit quant à lui des canaux différents, compatibles avec la rotation tardive qu'il propose, puisque les deux canaux décrits sont coaxiaux.

Toutefois les deux canaux ne sont présents que dans la partie extérieure de la canule et non dans la partie connectée à la seringue et/ou adaptateur, où la présence d'un joint est nécessaire pour tenter de maintenir l'air et l'eau totalement séparés. Ainsi, en fonction du positionnement du joint, qui est susceptible de varier à chaque pose d'une nouvelle canule, ainsi que de l'état d'ancienneté de ce joint, il peut devenir impossible d'obtenir un air totalement sec. Or un tel air parfaitement sec est indispensable dans la réalisation des actes dentaires, et il en résulte donc un problème important dans l'utilisation.

US 2009/317758 A1 divulgue une connexion présentant des canaux faisant saillie et pouvant pivoter autour de l'axe longitudinal de la connexion.

### Présumé de l'invention

Pour résoudre les différents problèmes présentés ci-dessus, il est proposé une canule pour seringue multifonction d'art dentaire comprenant une douille de fixation, ladite douille étant délimitée par une ouverture circulaire, un fond et une paroi latérale comprenant un cylindre de révolution, la canule comprenant de plus au moins deux canaux permettant l'acheminement de fluides séparément ou conjointement depuis ledit fond jusqu'à des orifices de projection de fluides, les deux canaux naissant dans ledit fond l'un à côté de l'autre, **caractérisée en ce que** le cylindre de révolution comprend une découpe dans l'épaisseur de la paroi, comprenant depuis l'ouverture au moins un segment transversal (c'est-à-dire disposé en travers, vis-à-vis de l'axe du cylindre), autrement dit dont la direction est différente de celle de l'axe du cylindre, puis un segment longitudinal, parallèle à l'axe du cylindre, orienté vers le fond.

La découpe dans l'épaisseur de la paroi permet d'introduire un pion porté par la paroi latérale d'un cylindre de fixation de la seringue multifonction ou de l'adaptateur. Le segment longitudinal permet de guider la canule en rotation autour de l'axe jusqu'à ce que les canaux mâles portés par la seringue, positionnés sur le cylindre de manière adaptée par rapport au pion, soient alignés avec les canaux femelles de la canule. Cela permet de surmonter le mauvais contrôle éventuel par l'utilisateur de l'engagement respectif des pièces. Une fois le guidage effectué par le segment transversal, le segment longitudinal permet d'engager les pièces jusqu'à leur solidarisation. Au final, l'alignement des canaux mâles et femelles est effectué par une voie mécanique, donc plus sûre que la voie purement visuelle de l'art antérieur.

Grâce à ces caractéristiques, on évite toute formation d'un copeau de plastique lors de la mise en place de la canule, ainsi que toute déformation des canaux en saillie de la seringue. Le fonctionnement de la seringue est prolongé et les opérations du praticien sont simplifiées.

Enfin, la qualité des différents fluides est totalement respectée. L'utilisation du système est donc au final plus fiable, plus hygiénique, plus simple et plus sûre.

Ces avantages constituent une avancée remarquable par rapport à la divulgation du document WO 9204878, avancée qui ne pouvait être obtenue sur la base des enseignements disponibles par ailleurs, notamment pas sur la base des enseignements du document WO 9007912. Au demeurant, WO 9007912 propose des canaux coaxiaux, très différents des canaux parallèles débouchant l'un à côté de l'autre de la canule selon l'invention. De plus, WO 9007912 ne propose qu'une position de butée en translation, et non pas deux positions de butée distinctes comme certains modes de réalisation de l'invention.

Avantageusement, la découpe comprend une butée s'opposant à un mouvement dans la direction opposée au fond.

Grâce à cette butée, on évite aussi tout risque de détachement de la canule sous l'effet de la pression engendrée par le fluide projeté, même si les tolérances de fabrication sur les diamètres de la douille sont élevées. On évite ainsi tout risque d'ingestion de la canule par le patient.

Par exemple, la butée en translation comprend un rétrécissement local de la découpe. Ainsi, la canule est verrouillée sur la seringue et ne bouge pas pendant l'utilisation par le praticien. Cela permet de faciliter la fabrication, la tolérance sur le diamètre des pièces pouvant être plus grande.

Préférentiellement, la largeur de la découpe évolue plus abruptement du côté de la deuxième position de butée en translation par rapport au rétrécissement local que du côté opposé. Ainsi, la mise en place de la canule est facilitée.

Avantageusement, la découpe a une embouchure qui est chanfreinée. Cela permet de guider le pion de l'adaptateur vers l'intérieur de la découpe même si l'utilisateur effectue un alignement médiocre en manipulant les pièces rapidement.

Avantageusement, la canule comprend un renfort, à l'extérieur de la douille, au droit de l'embouchure de la découpe. Un tel renfort permet de garantir la cohérence mécanique de la pièce.

Avantageusement encore, les embouchures des canaux sur ladite paroi sont chanfreinées. Ainsi, si malgré tout les canaux mâles de l'adaptateur sont mal positionnés vis-à-vis des canaux femelles de la canule, l'engagement réciproque est facilité par un guidage offert par le chanfrein.

Selon un mode de réalisation intéressant, les canaux sont renforcés, à proximité de la douille, par exemple par des nervures. Ainsi, les canaux mâles, une fois engagés dans les canaux femelles, ne risquent pas d'être tordus par un utilisateur souhaitant détacher la canule et qui la tordrait intempestivement : les nervures servent à empêcher une telle torsion.

Selon un autre aspect avantageux, la canule comprend une zone de prise autour d'un tube dans lequel les canaux sont enfouis, offrant une surface de prise plus large que le seul tube. Ainsi, l'utilisateur applique ses efforts, au moment de retirer la canule, de manière contrôlée.

Selon un deuxième aspect de l'invention, il est proposé un adaptateur pour fixer une canule jetable à l'extrémité d'une seringue multifonction d'art dentaire, l'adaptateur comprenant une extrémité ayant une forme générale de cylindre de révolution s'achevant sur une section d'où au moins deux canaux font saillie l'un à côté de l'autre, caractérisé en ce qu'un pion fait saillie localement sur la paroi latérale de l'extrémité. Un tel adaptateur est utilisé pour fixer les canules jetables évoquées plus haut sur une seringue multifonction.

### Brève description des figures

La présentation de l'invention va être poursuivie en relation avec les figures suivantes.
La figure 1 est une vue de trois quarts d'une canule selon un mode de réalisation de l'invention.
La figure 2 est une vue de l'intérieur de la douille de fixation de la canule de la figure 1.
La figure 3 est une vue d'un premier mode de réalisation d'un adaptateur selon l'invention.
La figure 4 est une vue d'un deuxième mode de réalisation d'un adaptateur selon l'invention.
La figure 5 est une vue de détail de la découpe de la douille de la canule des figures 1 et 2.
La figure 6 est une deuxième vue de détail de la même découpe.
La figure 7 est une vue de la canule des figures 1, 2 et 5 et 6 sous un autre angle.
La figure 8 présente un deuxième mode de réalisation de l'invention.
La figure 9 est une vue en coupe de la canule des figures 1 à 7.

### Exposé détaillé de l'invention

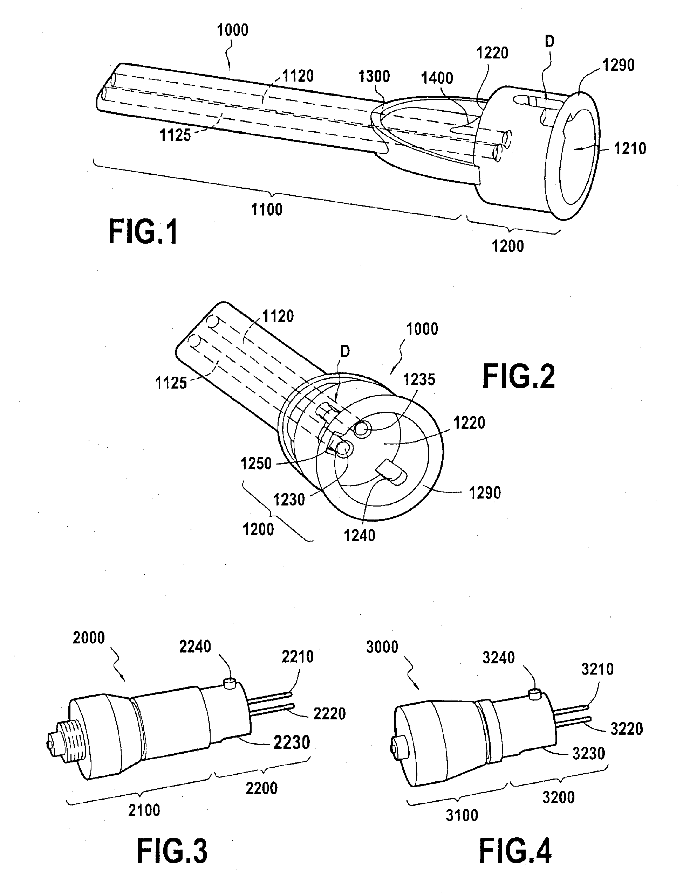

En figure 1, on a représenté une canule 1000 selon un mode de réalisation de l'invention. Il s'agit d'une pièce en plastique moulé, dont les différents éléments sont réalisés d'un seul tenant. Elle est destinée à être fixée à une seringue multifonction d'art dentaire, via un adaptateur. Elle a une dimension totale, par exemple, d'environ 5,5 cm.

La canule 1000 est, en première approche, composée de deux grandes parties qui sont un tube 1100 et une douille 1200.

Le tube 1100 a une forme cylindrique allongée. Il a une section oblongue, et renferme deux alésages parallèles le parcourant sur toute sa longueur, formant des canaux 1120 et 1125 pour les fluides projetés par la seringue. Ces canaux sont de diamètres semblables, sont disposés l'un à côté de l'autre.

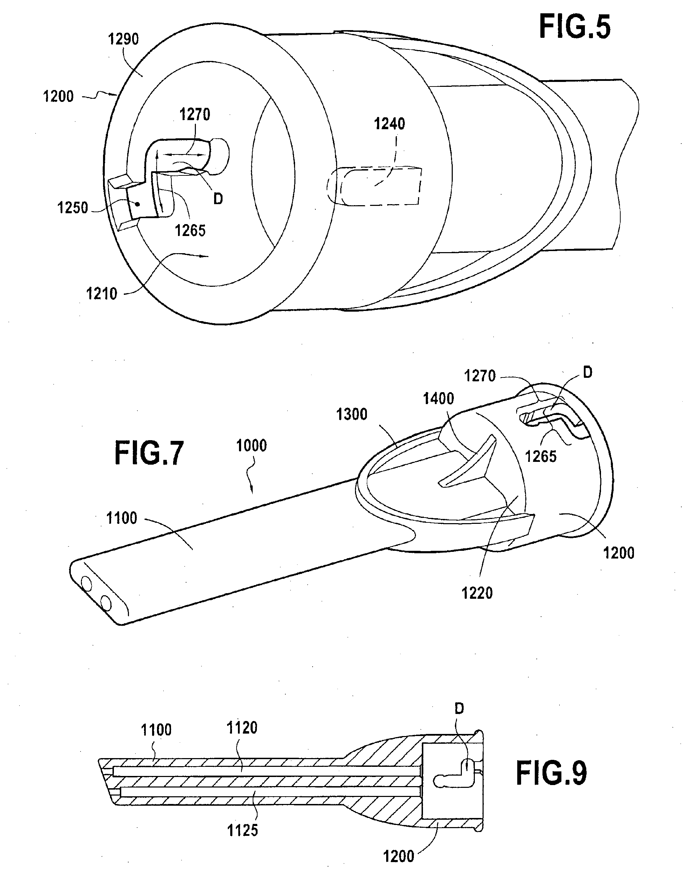

L'extrémité du tube 1100 à l'opposé de la douille 1200 est libre et peut être de forme arrondie, biseautée (voir la figure 9 en coupe). Sa surface constitue une coupe inclinée du tube 1100 par rapport à son axe. Elle présente deux orifices, destinés à la projection des fluides air et eau par la canule dans la bouche d'un patient. Dans certains modes de réalisation, les canaux 1120 et 1125 ont une structure interne spécifique, à l'approche des orifices de projection, permettant la formation d'un spray quand l'eau et l'air sont projetés simultanément.

La douille 1200 a la forme générale d'un cylindre de révolution creux dont l'axe est le même que celui du tube 1100 et dont les deux extrémités sont des sections circulaires 1210 et 1220, la première étant ouverte et la deuxième pleine. La paroi latérale de la douille 1200 a une épaisseur de l'ordre, par exemple, de 1 mm. Le diamètre de la douille est légèrement supérieur à 1 cm, ces dimensions pouvant varier.

Le tube 1100 est fixé à angle droit au centre de la section 1220 de la douille 1200.

La canule 1000 présente de plus des éléments de renfort et de prises, référencés 1290, 1300 et 1400, qui seront décrits en relation avec les figures suivantes. Et de manière remarquable, elle présente une découpe D sur la paroi de la douille. Cette découpe sera décrite plus loin.

En figure 2, on a représenté l'intérieur de la douille de fixation de la canule 1000. Celui-ci est aperçu à travers la section ouverte 1210. Le tube 1100 est visible en arrière-plan.

La paroi interne de la section 1220 est visible au fond de la douille 1200. Cette paroi 1220 est percée par les embouchures 1230 et 1235 des canaux 1120 et 1125. Ces embouchures 1230 et 1235 sont placées à proximité du centre de la paroi 1220, au droit du tube 1100.

De manière avantageuse, les embouchures 1230 et 1235 sont par ailleurs chanfreinées, par exemple avec des angles d'environ 45°.

Sur la paroi latérale interne de la douille 1200, se situe une nervure 1240, dont la fonction est celle d'un détrompeur, pour faciliter la mise en place de la canule sur la seringue. La nervure nait au contact de la paroi 1220, s'étendant dans la direction longitudinale, et s'achevant environ aux deux tiers de la longueur de la douille 1200. La largeur de la nervure 1240 est d'environ 10°. Elle s'achève par une extrémité arrondie. Elle présente de plus une surface plate faisant face à l'axe de la douille 1200.

De manière particulièrement remarquable, la paroi latérale de la douille 1200 présente une découpe D la traversant radialement de part en part. Cette découpe est limitée à un secteur angulaire restreint de la douille 1200, d'environ 20°. La naissance de cette découpe D sur la section ouverte 1210 est visible au repère 1250, qui désigne l'embouchure de la découpe sur la section ouverte 1210. De chaque côté de cette embouchure 1250, la paroi de la douille 1200 est chanfreinée, par exemple à un angle de 45°.

La forme précise de la découpe D sera décrite plus loin en relation avec les figures suivantes.

Un renfort 1290, présenté dans le mode de réalisation décrit sous une forme de symétrie de révolution parfaite, est présent sur la surface externe de la douille 1200, au droit de la section 1210, notamment en regard de l'embouchure 1250. Il peut avoir une épaisseur, dans la direction longitudinale, d'environ 1 mm, et dans la direction radiale, également d'environ 1 mm.

En figure 3, on a représenté un premier mode de réalisation d'un adaptateur selon l'invention, adapté pour coopérer avec la canule 1000 représentée aux figures 1 et 2. L'adaptateur est en acier inoxydable, ou en aluminium ou encore en résine synthétique. Il est composé de deux sections, disposées consécutivement selon une direction longitudinale.

Une première section 2100 est une section de fixation sur une seringue multifonction d'art dentaire. Elle est spécifique d'un type donné de seringues multifonction d'art dentaire, fournies par un fabricant de fauteuils donné.

La deuxième section, référencée 2200, est une section de fixation à une canule du type présenté en figures 1 et 2. Elle possède une symétrie générale de révolution, ainsi qu'une forme générale cylindrique, avec une extrémité libre qui est une section droite et plane du cylindre. Des canaux métalliques mâles, en saillie sur cette extrémité, sont adaptés à engager les embouchures 1230 et 1235 des canaux de la canule 1000. Une rainure longitudinale 2230 est adaptée à recevoir la nervure 1240 de la canule 1000.

Enfin, de manière remarquable, un pion 2240 fait saillie localement, en un secteur angulaire donné du cylindre, radialement sur la paroi de la section 2200. Ce pion 2240 est adapté à être amené dans la découpe D de la douille 1200 par l'embouchure 1250.

En figure 4, on a représenté un adaptateur 3000 selon un deuxième mode de réalisation de l'invention. De manière similaire à l'adaptateur 2000 représenté en figure 3, cet adaptateur 3000 comprend une première section 3100 destinée à permettre sa fixation à l'extrémité d'une seringue multifonction d'art dentaire spécifique fournie par un fabricant de fauteuil donné.

L'adaptateur 3000 comprend également une section 3200 de fixation à la canule 1000. La section 3200 est en tout point similaire à la section 2200 décrite en relation à la figure 3.

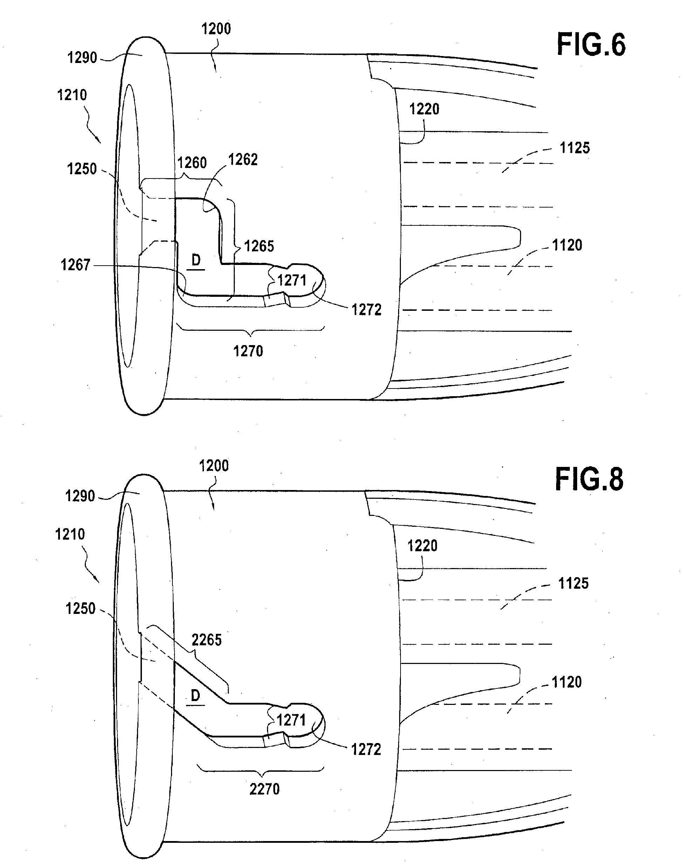

En figures 5 et 6, on va maintenant présenter en détail la forme de la découpe D présente dans la paroi de la douille 1200. Cette découpe est placée approximativement à l'opposé, diamétralement, de la nervure 1240.

La découpe D nait dans la section 1210 par l'embouchure 1250, puis comporte un premier segment de largeur constante s'étendant dans la direction longitudinale de la douille. Ce segment est référencé 1260 en figure 6. Il est suivi d'un deuxième segment 1265, à angle droit du premier segment 1260, s'étendant donc sur la circonférence de la douille, sur un secteur angulaire de la douille d'une dizaine de degrés. Ce segment 1265 est toujours de largeur constante. Il est suivi par un troisième segment allongé, référencé 1270, à angle droit du deuxième segment et s'étendant, comme le premier segment 1260, dans la direction longitudinale, vers le tube 1100.

Le troisième segment 1270 a une longueur sensiblement égale au double de la longueur du premier segment 1260. Il s'achève par une extrémité borgne 1272. Sur la majeure partie de sa longueur, le segment 1270 a une largeur constante. Néanmoins à l'approche de l'extrémité 1272, il présente sur ces deux parois des bossages provoquant, à leur hauteur, un rétrécissement de la largeur de la découpe.

L'angle 1262 entre les segments 1260 et 1265 définit une position de butée, qui est une position de butée en translation pour le pion 2240 ou 3240 pénétrant dans la découpe, quand le praticien pose la canule sur la seringue. Cette position de butée permet de maintenir à distance des canaux mâles portés par la seringue ou l'adaptateur lors de l'engagement initial des deux pièces, qui peut être mal contrôlé par l'utilisateur, notamment en ce qui concerne l'alignement angulaire de la canule avec la seringue.

L'angle 1267 entre les segments 1265 et 1270 définit quant à lui également une position de butée, qui est une position de butée en rotation pour le pion au cours de la pose de la canule. Cette position de butée, qui reflète la fonction de guidage du segment 1265, permet d'assurer l'alignement angulaire de la canule et de la seringue, et donc des canaux mâles et femelles, par une voie mécanique plus efficace que la voie purement visuelle de l'art antérieur.

Le segment 1270 permet l'insertion des canaux mâles qui sont, à ce stade, correctement positionnés, dans les canaux femelles.

L'angle 1267 entre les segments 1265 et 1270 définit aussi une position de butée en translation pour le pion lors d'une séparation de la canule 1000 et de la seringue. Ce dernier aspect constitue une sécurité pour éviter qu'une canule mal ajustée ne tombe dans la bouche d'un patient sous l'effet du flux de liquide ou d'air projeté.

En figure 7, on a représenté la canule 1000 vue de côté. On reconnaît le tube 1100 ainsi que la douille 1200. On va maintenant décrire des éléments de prise et de renfort qui ont déjà été aperçus sur les figures précédentes.

La canule 1000 comprend avantageusement une arche 1300 naissant en deux points diamétralement opposés de la section 1220 de la douille 1200. L'arche 1300 définit un plan qui est perpendiculaire à la section 1220. La grande dimension de la section du tube 1100 est disposée dans ce plan. L'intérieur de l'arche 1300 comprend une surface de matière qui constitue, autour de la base du tube 1100, un complément de prise pour l'utilisateur souhaitant manipuler la canule et notamment la retirer de la seringue. L'utilisateur peut disposer un doigt sur un côté de l'arche et un autre doigt sur le deuxième côté de l'arche, et il dispose ainsi d'une grande surface pour serrer la canule.

Deux nervures d'angle 1400 sont disposées perpendiculairement au plan de l'arche 1300, entre le tube 1100 et la paroi de la section 1220. Elles constituent des renforts à la jonction entre le tube 1100 et la douille 1200. Elles s'opposent à une torsion du tube 1100 autour d'un axe parallèle à la grande direction de sa section. Les deux nervures 1400 sont par exemple disposées l'une par rapport à l'autre de manière symétrique par rapport à l'axe de la douille.

La hauteur de l'arche 1300 est d'environ d'un cinquième de la hauteur du tube 1100. La hauteur des nervures 1400 est quant à elle, d'environ un quart la hauteur de l'arche 1300. Ces proportions peuvent varier.

Dans une variante, la douille 1200 n'est pas constituée uniquement d'un cylindrique creux, mais comprend aussi, entre le cylindre creux et le tube 1100, un cône creux tronqué. Un tel cône peut épouser une forme complémentaire à l'extrémité de l'adaptateur. Les embouchures des canaux femelles sont positionnées au fond du cône, et les canaux mâles de l'adaptateur sont positionnés à l'extrémité de la forme complémentaire.

Dans une autre variante, éventuellement combinable avec la précédente, la découpe dans la paroi du cylindre n'est pas traversante, mais constitue seulement un creux dans la surface interne de la paroi.

Selon une autre forme de mise en oeuvre, la découpe est sur la surface externe de la paroi, et la canule coopère avec un adaptateur comprenant un cylindre externe supplémentaire qui porte un pion tourné vers l'intérieur.

Par ailleurs, selon une autre forme de réalisation de la découpe, présentée en figure 8, celle-ci est composée d'uniquement deux segments : les segments 1260 et 1265 sont remplacés par un segment unique 2265 parcourant le cylindre transversalement mais pas perpendiculairement à l'axe, par exemple avec un angle de 45°. Sa fonction est, comme le segment 1265 du mode de réalisation de la figure 6, de guider la canule et la seringue dans leur mouvement angulaire, l'une par rapport à l'autre. Un segment 2270, longitudinal, similaire au segment 1270 permet ensuite l'engagement réciproque des pièces jusqu'à leur solidarisation. Les dimensions de la nervure 1240 et de la rainure 2230 sont adaptées pour être compatibles avec le parcours défini par les segments 2260 et 2270.

L'invention ne se limite pas aux modes de réalisation décrits mais s'étend à toutes les variantes dans le cadre de la portée des revendications.

## Revendications

1. Canule (1000) pour seringue multifonction d'art dentaire comprenant une douille de fixation (1200), ladite douille étant délimitée par une ouverture circulaire (1210), un fond (1220) et une paroi latérale comprenant un cylindre de révolution, la canule comprenant de plus au moins deux canaux (1120, 1125) permettant l'acheminement de fluides séparément ou conjointement depuis ledit fond (1220) jusqu'à des orifices de projection de fluides, les deux canaux naissant dans ledit fond (1220) l'un à côté de l'autre, **caractérisée en ce que** le cylindre de révolution présente une découpe (D) dans l'épaisseur de sa paroi, comprenant depuis l'ouverture (1210) au moins un segment (1265 ; 2265) ayant une direction différente de la direction de l'axe du cylindre, puis un segment longitudinal (1270 ; 2270) orienté vers le fond (1220).

2. Canule selon la revendication précédente, dans laquelle la découpe (D) comprend une butée (1267 ; 1271) adaptée à s'opposer à un mouvement dans la direction opposée au fond (1220).

3. Canule selon la revendication précédente, dans laquelle la butée comprend un rétrécissement local (1271) de la découpe (D).

4. Canule selon la revendication précédente, dans laquelle le segment longitudinal (1270) a une largeur constante sur une majeure partie de sa longueur, mais présente, à l'approche d'une extrémité borgne (1272) par laquelle il s'achève, sur ses deux parois, des bossages provoquant à leur hauteur un rétrécissement de la largeur de la découpe (D), celle-ci évoluant plus abruptement du côté du fond (1220) par rapport au rétrécissement local (1271) que du côté opposé.

5. Canule selon l'une des revendications précédentes, dans laquelle la découpe (D) a une embouchure (1250) qui est chanfreinée.

6. Canule selon l'une des revendications précédentes, comprenant un renfort (1290), à l'extérieur de la douille (1200), au droit de l'embouchure (1250) de la découpe.

7. Canule selon l'une des revendications précédentes, dans laquelle les embouchures (1230, 1235) des canaux sur ledit fond (1220) sont chanfreinées.

8. Canule selon l'une des revendications précédentes, dans laquelle les canaux (1120, 1125) sont renforcés, à proximité de la douille (1200), par exemple par des nervures (1400).

9. Canule selon l'une des revendications précédentes, comportant une zone de prise (1300) à proximité de la douille (1200) autour d'un tube (1100) dans lequel les canaux sont enfouis, offrant une surface de prise plus large que le seul tube.

10. Adaptateur (2000 ; 3000) pour fixer une canule jetable à l'extrémité d'une seringue multifonction d'art dentaire selon l'une des revendications 1 à 9, l'adaptateur comprenant une extrémité (2200) ayant une forme générale de cylindre de révolution s'achevant sur une section d'où au moins deux canaux (2210, 2220 ; 3210, 3220) font saillie l'un à côté de l'autre, **caractérisé en ce qu'**un pion (2240 ; 3240) fait saillie localement sur la paroi latérale de l'extrémité (2200), et est adapté à être amené dans une découpe de la douille de fixation d'une telle canule jetable, la canule et la seringue étant guidées dans un mouvement angulaire l'une par rapport à l'autre, puis l'engagement réciproque de pièces dans la direction longitudinale jusqu'à leur solidarisation étant permis.

## Patentansprüche

1. Kanüle (1000) für eine zahnärztliche Multifunktionsspritze, umfassend eine Befestigungshülse (1200), wobei die Hülse durch eine kreisförmige Öffnung (1210), einen Boden (1220) und eine Seitenwand mit einem Rotationszylinder begrenzt ist, wobei die Kanüle außerdem wenigstens zwei Kanäle (1120, 1125) umfasst, die das Befördern von Fluiden getrennt oder gemeinsam von dem Boden (1220) aus bis zu Fluidspritzöffnungen ermöglichen, wobei die beiden Kanäle im Boden (1220) nebeneinander beginnen, **dadurch gekennzeichnet, dass** der Rotationszylinder einen Ausschnitt (D) in der Dicke seiner Wand aufweist, der von der Öffnung (1210) aus wenigstens einen Abschnitt (1265; 2265) mit einer von der Richtung der Achse des Zylinders abweichenden Richtung, dann einen in Richtung des Bodens (1220) gerichteten Längsabschnitt (1270; 2270) umfasst.

2. Kanüle nach dem vorhergehenden Anspruch, wobei der Ausschnitt (D) einen Anschlag (1267; 1271) umfasst, der geeignet ist, sich einer Bewegung in der vom Boden (1220) abgewandten Richtung entgegenzusetzen.

3. Kanüle nach dem vorhergehenden Anspruch, wobei der Anschlag eine lokale Verjüngung (1271) des Ausschnitts (D) umfasst.

4. Kanüle nach dem vorhergehenden Anspruch, wobei der Längsabschnitt (1270) über einen überwiegenden Teil seiner Länge eine konstante Breite aufweist, aber, je näher man einem Sackende (1272), mit dem er endet, kommt, er an seinen beiden Wänden Buckel aufweist, die in ihrer Höhe eine Verjüngung der Breite des Ausschnitts (D) bewirken, wobei sich diese auf der Seite des Bodens (1220) gegenüber der lokalen Verjüngung (1271) abrupter verändert als auf der gegenüberliegenden Seite.

5. Kanüle nach einem der vorhergehenden Ansprüche, wobei der Ausschnitt (D) eine Mündung (1250), die gefast ist, aufweist.

6. Kanüle nach einem der vorhergehenden Ansprüche, umfassend eine Verstärkung (1290) außerhalb der Hülse (1200), im Bereich der Mündung (1250) des Ausschnitts.

7. Kanüle nach einem der vorhergehenden Ansprüche, wobei die Mündungen (1230, 1235) der Kanäle an dem Boden (1220) gefast sind.

8. Kanüle nach einem der vorhergehenden Ansprüche, wobei die Kanäle (1120, 1125) in der Nähe der Hülse (1200) beispielsweise durch Rippen (1400) verstärkt sind.

9. Kanüle nach einem der vorhergehenden Ansprüche, umfassend einen Greifbereich (1300) in der Nähe der Hülse (1200) um eine Röhre (1100) herum, in die die Kanäle eingebettet sind, der eine breitere Greiffläche als nur die Röhre bietet.

10. Adapter (2000; 3000) zum Befestigen einer Einwegkanüle am Ende einer zahnärztlichen Multifunktionsspritze nach einem der Ansprüche 1 bis 9, wobei der Adapter ein allgemein rotationszylindrisches Ende (2200) umfasst, das an einem Abschnitt endet, von dem wenigstens zwei Kanäle (2210, 2220; 3210, 3220) nebeneinander vorspringen, **dadurch gekennzeichnet, dass** ein Stift (2240; 3240) an der Seitenwand des Endes (2200) lokal vorspringt und geeignet ist, in einen Ausschnitt der Befestigungshülse einer solchen Einwegkanüle gebracht zu werden, wobei die Kanüle und die Spritze in einer Winkelbewegung zueinander geführt werden, wobei dann das gegenseitige Eingreifen von Teilen in der Längsrichtung bis zu ihrem festen Verbinden ermöglicht wird.

## Claims

1. A cannula (1000) for a multifunction dental syringe, the cannula comprising a fastener bushing (1200) that is defined by a circular opening (1210), an end wall (1220), and a side wall comprising a circular cylinder, the cannula also including at least two channels (1120, 1125) enabling fluids to be conveyed separately or together from said end wall (1220) to fluid projection orifices, the two channels beginning in said end wall (1220) beside each other, the cannula being **characterized in that** the circular cylinder presents a cutout (D) in the thickness of its wall, which cutout comprises, going from the opening (1210): at least one segment (1265; 2265) extending in a direction other than the axial direction of the cylinder; followed by a longitudinal segment (1270; 2270) extending towards the end wall (1220).

2. A cannula according to the preceding claim, wherein the cutout (D) includes an abutment (1267; 1271) adapted to oppose movement away from the end wall (1220).

3. A cannula according to the preceding claim, wherein the abutment comprises a local constriction (1271) in the cutout (D).

4. A cannula according to the preceding claim, wherein the longitudinal segment (1270) is of constant width over a major fraction of its length, but on approaching a blind end (1272) with which it terminates, it presents projections from its two walls that constrict the width of the cutout (D) in register therewith, the width of the cutout varying more abruptly on the end wall side of the local constriction (1271) than on its opposite side.

5. A cannula according to any preceding claim, wherein the cutout (D) has an opening (1250) that is chamfered.

6. A cannula according to any preceding claim, including reinforcement (1290) on the outside of the bushing (1200) in register with the opening (1250) of the cutout.

7. A cannula according to any preceding claim, wherein the openings (1230, 1235) of the channels in said end wall (1220) are chamfered.

8. A cannula according to any preceding claim, wherein the channels (1120, 1125) are reinforced in the proximity of the bushing (1200), e.g. by brackets (1400).

9. A cannula according to any preceding claim, including a grip zone (1300) in the proximity of the bushing (1200) around a tube (1100) in which the channels are buried, providing a grip surface that is larger than provided by the tube on its own.

10. An adapter (2000; 3000) for fastening a discardable cannula according to any one of claims 1 to 9 to the end of a multifunction dental syringe, the adapter having an end (2200) with the general shape of a circular cylinder terminating at a section from which at least two channels (2210, 2220; 3210, 3220) project beside each other, the adapter being **characterized in that** a peg (2240; 3240) projects locally from the side wall of the end (2200) and is adapted to be engaged in a cutout of the fastener bushing of such a discardable cannula, the cannula and the syringe being guided in mutual angular movement followed by mutual engagement of the parts in the longitudinal direction until they can be secured to each other.
